# FASCICULE DE BREVET EUROPEEN

(11) **EP 3 238 799 B1**
(45) Date de publication et mention de la délivrance du brevet: **12.12.2018**
(21) Numéro de dépôt: 17166035.0
(22) Date de dépôt: 11.04.2017
(51) Int. Cl.: B01D 3/00

(54) **DISPOSITIF DE DISTRIBUTION DU GAZ ET DU LIQUIDE DANS LES COLONNES DE DISTILLATION CATALYTIQUE**
VORRICHTUNG ZUR GAS- UND FLÜSSIGKEITSVERTEILUNG IN DEN KATALYTISCHEN DESTILLATIONSSÄULEN
DEVICE FOR DISTRIBUTING GAS AND LIQUID INTO CATALYTIC DISTILLATION COLUMNS

(30) Priorité: 29.04.2016 FR 1653885
(43) Date de publication de la demande: 01.11.2017
(73) Titulaire: IFP Energies nouvelles, 92500 Rueil-Malmaison (FR)
(72) Inventeur: AUGIER, Frederic, 69360 SAINT SYMPHORIEN D OZON (FR); BAZER-BACHI, Frederic, 30340 SAINT PRIVAT DES VIEUX (FR); COUPARD, Vincent, 69100 VILLEURBANNE (FR); LEINEKUGEL LE COCQ, Damien, 69600 Oullins (FR)
(74) Mandataire: IFP Energies nouvelles

(56) Documents cités:
- US-A- 5 493 059
- US-A- 5 776 320
- US-A- 6 045 762
- US-A- 6 149 879
- US-A1- 2015 086 430

## Description

### CONTEXTE DE L'INVENTION

L'objectif de cette invention est l'amélioration des internes utilisés dans les colonnes de distillation réactive. On entend par internes tout élément utile à la distribution des fluides gaz et liquide au sein de la zone catalytique. On parle de plateau de la zone catalytique pour désigner l'ensemble des internes et des éléments de supportage du lit catalytique.

La distillation réactive, dite aussi catalytique, consiste à effectuer une séparation par distillation puis une réaction chimique au sein d'une même équipement appelé colonne de distillation réactive. Cette opération est particulièrement indiquée pour les réactions équilibrées (par exemple A + B ↔ C + D), donc incomplètes. Ainsi, si l'on retire, au cours de la réaction, un des constituants, l'équilibre se déplacera dans le sens de formation de ce dernier, améliorant de fait la conversion réactionnelle.

Dans la suite du texte on utilisera indifféremment les termes colonne réactive ou colonne catalytique.

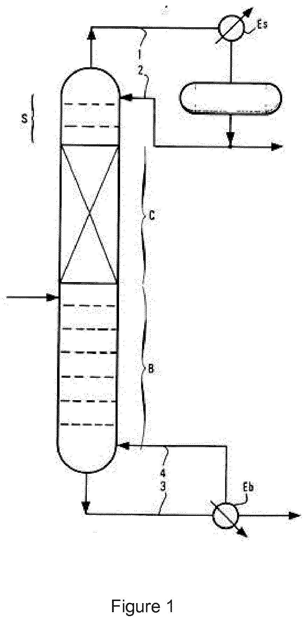

Un mode de réalisation de colonne de distillation réactive se présente comme une succession de zones catalytiques et de zones de distillation (Cf figure 1 pour la configuration générale d'une colonne réactive).

Les documents US 6 149 879 et US 5 776 320 décrivent des colonnes de distillation réactives.

Dans le contexte de la présente invention, le gaz et le liquide se rencontrent uniquement dans les zones de distillation, et la zone catalytique ne concerne que le liquide. Le gaz doit donc contourner au sens de « by passer » dans la terminologie anglo saxonne, la zone catalytique sans aucun contact avec le liquide. Dans la suite on utilisera le terme « by pass » bien connu de l'homme du métier pour signifier contournement.

Le nouveau schéma d'internes décrit dans la présente invention diffère de celui de l'art antérieur par un aménagement du collecteur central distribuant le liquide en amont de la zone catalytique qui permet à ce dernier d'accepter des variations de débit liquide importantes sans atteindre l'engorgement de la zone catalytique.

### DESCRIPTION SOMMAIRE DES FIGURES

La figure 1 est une représentation schématique d'une colonne de distillation catalytique qui permet de visualiser l'alternance des zones de distillation et des zones réactives. Une colonne peut comporter plusieurs zones réactives et plusieurs zones de distillation alternées.

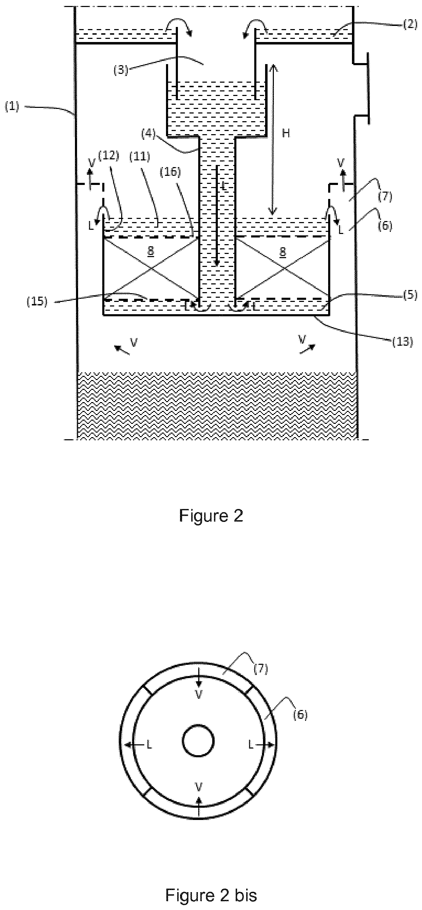

La figure 2 représente une vue schématique d'un plateau de colonne réactive selon l'invention. La figure 2 montre une zone d'alimentation en liquide constituée d'un élément cylindrique ou parallélépipédique (3), puis tubulaire (4), situé au centre de la colonne qui amène le liquide dans la zone de distribution (5) situé au bas de la zone catalytique.

Le liquide traverse la zone catalytique (8) en « up flow » puis est évacué de ladite zone par l'intermédiaire d'un déversoir (12).

Le liquide rejoint la zone de distillation en aval en passant par une zone périphérique dédiée (6).

Le gaz circule dans une zone périphérique dédiée (7) qui est entièrement séparée de la zone périphérique du liquide (6) par des parois verticales étanches comme cela est visible sur la figure 2 bis qui est une coupe de la colonne catalytique faite au niveau de la zone catalytique et qui permet de visualiser la partie de zone périphérique dédiée au liquide (6), et la partie de zone périphérique dédiée au gaz (7).

La figure 2 bis est une vue de dessus qui permet de visualiser la zone périphérique dédiée au gaz (7) et la zone périphérique dédiée au liquide (6).

La figure 3 représente une variante de l'invention dans laquelle le gaz circule non plus par la zone périphérique dédiée (7), mais par un réseau de cheminées (9) qui traverse la zone catalytique (8).

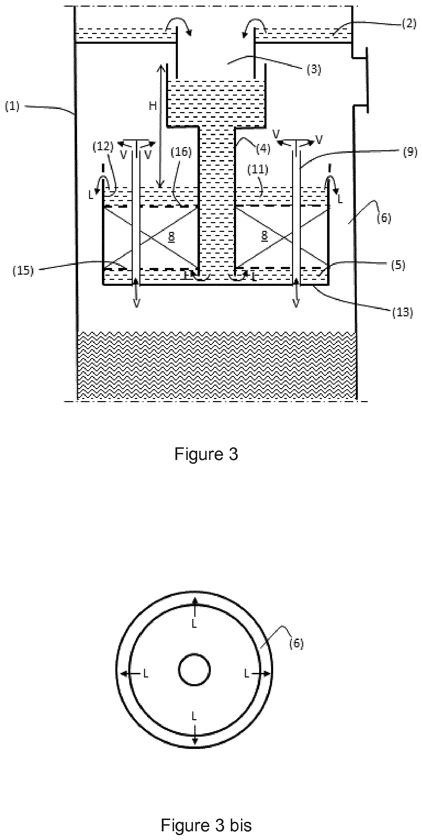

La figure 3 bis est une vue de dessus qui permet de visualiser la zone périphérique dédiée au liquide (6).

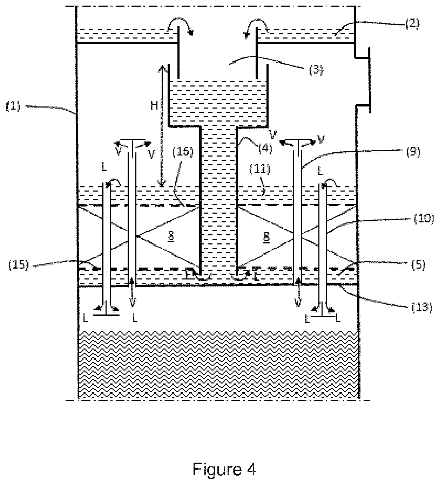

La figure 4 représente une autre variante de la présente invention dans laquelle le liquide n'est plus évacué de la zone catalytique par la zone périphérique dédiée (6), mais par un réseau de cheminées (10) traversant la zone catalytique (8), et s'intercalant à travers le réseau des cheminées (9) de « by pass » du gaz.

Le fait que les variantes soient compatibles entre elles signifie qu'elle peuvent être combinées. Par exemple, on reste dans le cadre de l'invention en utilisant le réseau de cheminées (9) pour le gaz, et en continuant à évacuer le liquide par la zone périphérique dédiée (6), ou en évacuant le liquide par le réseau de cheminées (10) tout en by passant la zone catalytique (8) pour le gaz au moyen de la zone périphérique dédiée (7).

### EXAMEN DE L'ART ANTERIEUR

L'art antérieur dans le domaine des colonnes réactives est essentiellement représenté par le document FR 2737132. Ce texte décrit le schéma général d'une colonne réactive et décrit plus particulièrement le trajet suivi par le liquide au niveau de la zone catalytique. Il ne mentionne aucun dispositif permettant de faire face à d'importantes variations du débit liquide et/ou gaz. L'interne décrit dans le brevet FR2737132 peut se résumer de la façon suivante :
Une zone catalytique (C) est encadrée par deux zones de distillation (B), la vapeur de la distillation circulant du bas vers le haut de manière à n'être pratiquement pas en contact avec le catalyseur, et le liquide circulant depuis la zone de distillation supérieure (5) vers une zone sensiblement centrale située en bas de la zone catalytique, ceci au moyen d'un collecteur central ayant une forme conique puis cylindrique qui amène le liquide au-dessous de la zone catalytique.

Le liquide circule ensuite radialement au-dessous de ladite zone catalytique (8) par un moyen de type conduite radiale, de façon à être introduit dans une zone de répartition du liquide.

A partir de cette zone de répartition, le liquide circule à travers le catalyseur dans la zone catalytique selon une direction ascendante, dite « upflow », puis on récupère le liquide par au moins un moyen de déversement du liquide, en zone de distillation inférieure.

La zone catalytique est surmontée d'une certaine couche de liquide qui permet d'assurer l'alimentation du moyen de déversement.

L'alimentation en liquide de la zone catalytique ne permet qu'une flexibilité réduite puisque un niveau liquide s'établit dans le collecteur central et que, si celui-ci est dépassé , il y a invasion de la zone catalytique par le liquide.

Dans la suite du texte on utilisera souvent les termes « upflow » et « downflow » pour désigner respectivement des écoulements de liquide ascendants ou descendants.

### DESCRIPTION SOMMAIRE DE L'INVENTION

La présente invention est définie dans la revendication 1. Une colonne de distillation réactive est constituée par l'alternance de zones catalytiques (8) et de zones de distillation dans laquelle, au niveau de chacune des zones catalytiques (8), le liquide est introduit en amont de ladite zone par l'intermédiaire d'un collecteur liquide central comprenant une première partie cylindrique (3), suivie d'une seconde partie tubulaire (4) qui amène le liquide dans une zone de distribution liquide (5) située au-dessous de la zone catalytique (8).

Cette zone de distribution liquide (5) a généralement la même section que ladite zone catalytique (8), le liquide traversant ensuite la zone catalytique en écoulement ascendant et étant évacué de ladite zone catalytique par une zone périphérique (6) attenante à la paroi de la colonne, ou par un système de cheminées (10) traversant la zone catalytique.

Le gaz en provenance de la zone de distillation aval contourne la zone catalytique (8) par une zone périphérique dédiée (7), ou par un réseau de cheminées verticales (9) qui débouchent au-dessus du niveau supérieur des déversoirs liquide (12).

Le collecteur central (3) est équipé d'un dispositif de trop plein dont la hauteur H est définie en fonction des pertes de charges liquide à la traversée de la plaque (15) et du lit catalytique (8).

Lorsque le « by pass » de la zone catalytique (8) par le gaz se fait au moyen du réseau de cheminées (9), le nombre de cheminées (9) par unité de section de la zone catalytique est compris entre 1 et 20 cheminées/m², préférentiellement entre 2 et 15 cheminées /m2.

Lorsque l'évacuation du liquide de la zone catalytique (8) se fait par un réseau de cheminées (10), s'intercalant entre le réseau de cheminées gaz (9), le nombre de cheminées d'évacuation du liquide (10) est compris entre 20 et 200 cheminées/m², et de manière préférée entre 100 et 150 cheminées/m².

Les différentes possibilités de contournement de la zone catalytique (8) par le gaz, et d'évacuation du liquide peuvent se combiner entre elles, c'est-à-dire :
- évacuation du liquide par la zone périphérique dédiée (6) et by-pass de la zone catalytique par le gaz au moyen du réseau de cheminées (9) selon la figure 3.
- évacuation du liquide par le réseau de cheminées (10) et by-pass de la zone catalytique par le gaz au moyen de la zone périphérique dédiée (7).
- évacuation du liquide par le réseau de cheminées (10) et un by-pass de la zone catalytique par le gaz au moyen du réseau de cheminées (9) selon la figure 4.

### DESCRIPTION DETAILLEE DE L'INVENTION

La configuration de la colonne réactive selon l'invention repose sur deux notions :
1) la traversée du lit catalytique par le liquide en écoulement ascendant et,
2) le « by-pass » de ladite zone catalytique par le gaz qui circule au travers d'une zone périphérique dédiée ou de cheminées, et ne rencontre donc pas le liquide au niveau de la zone catalytique.

Le contact entre la phase liquide et la phase gaz se fait uniquement au niveau des zones de distillation qui encadrent la zone catalytique. Ces zone de distillation ne seront pas décrites plus en détail car elles ne sont pas sensiblement différentes de celles de l'art antérieur.

Plus précisément, la présente invention peut se définir comme une colonne de distillation réactive constituée par l'alternance de zones catalytiques (8) et de zones de distillation (B). Chaque zone catalytique se trouve donc encadrée par une zone de distillation amont et une zone de distillation aval.

La disposition générale des zones de distillation et des zones catalytiques telle que montrée sur la figure 1 n'est pas différente de celle de l'art antérieur.

Dans la cadre de la présente invention, chaque zone catalytique est le siège d'une réaction avec la phase liquide uniquement, et l'écoulement de ladite phase liquide au travers de la couche catalytique est ascendant.

La suite de la description est faite en suivant la figure 2 selon l'invention.

Le liquide en provenance de la zone de distillation amont est récupéré dans un collecteur liquide central (3) comprenant une première partie cylindrique ou parallélépipédique (3) suivie d'une seconde partie tubulaire (4) qui amène le liquide dans une zone de distribution liquide (5) située au-dessous de la zone catalytique (8) délimitée par le fond (13) de ladite zone catalytique.

Le liquide traverse ensuite une grille (15) qui crée une certaine perte de charge dont il est tenu compte dans le dimensionnement du dispositif de trop plein du collecteur central (3).

Le lit catalytique peut soit être supporté directement par la grille (15), soit être supporté par une seconde grille, présentant une faible perte de charge, située juste au-dessus de la grille (15) (variante non représentée sur la figure 2).

Selon une variante de la présente invention représentée par la figure 2, le liquide traverse ensuite la zone catalytique (8) en écoulement ascendant et est évacué de ladite zone catalytique par débordement au-dessus de la paroi latérale (12) qui permet de définir une couche liquide supérieure (11). On appelle dans la suite cette paroi (12) déversoir.

Le transfert du liquide vers la zone de distillation aval se fait par une zone périphérique dédiée (6) attenante à la paroi de la colonne.

Selon une autre variante de la présente invention représentée par la figure 4, le liquide traverse la zone catalytique (8) en écoulement ascendant et est évacué de ladite zone catalytique par débordement dans les cheminées (10). Le niveau de l'extrémité supérieure ouverte des cheminées (10) permet de définir une couche liquide supérieure (11). Le transfert du liquide vers la zone de distillation aval se fait alors par les cheminées (10).

Le gaz en provenance de la zone de distillation aval contourne la zone catalytique (8) soit par une zone périphérique dédiée (7), soit par un réseau de cheminées verticales (9) qui débouchent au-dessus du niveau supérieur du déversoir liquide (12) tel que représenté sur la figure 3.

Le collecteur central (3) est équipé d'un dispositif de trop plein dont la hauteur H est définie en fonction des pertes de charges liquide à la traversée de la plaque inférieure (15) supportant le lit catalytique et du lit catalytique lui-même (8). H est la hauteur de liquide maximale entre le niveau de débordement de la couche liquide (11) et le haut du dispositif de trop plein du collecteur central (3). Ce dispositif de trop plein peut être composé de deux éléments de section différentes, celui de plus petite section étant positionné au-dessus de l'autre.

Selon une première variante de la présente invention représentée par la figure 3, le gaz contourne la zone catalytique non pas au moyen de la zone périphérique dédiée (7), mais au moyen d'un système de cheminées (9) traversant la zone catalytique (8), et débouchant à un niveau situé au-dessus du niveau du déversoir (12). Le pas entre cheminées (9) pour la traversée du gaz est préférentiellement soit carré, soit triangulaire.

Le nombre de cheminées (9) par unité de section de la zone catalytique est préférentiellement compris entre 1 et 20 cheminées/m², et de manière encore préférée compris entre 2 et 15 cheminées /m2.

Ceci permet d'alimenter le gaz de manière sensiblement homogène en pied de zone de distillation amont.

Selon une autre variante de la colonne de distillation de l'invention, le liquide après traversée de la zone catalytique (8) est renvoyé vers la zone de distillation aval en passant par une zone périphérique dédiée (6) séparée par des parois étanches de la zone périphérique (7) dédiée au gaz lorsque le passage du gaz se fait par ladite zone périphérique. Le compartimentage des zones périphériques dédiée au gaz (7) d'une part, au liquide (6) d'autre part, se voit en vue de dessus sur la figure 2 bis.

Selon une autre variante de la présente invention, le liquide est évacué de la zone catalytique (8) par un réseau de cheminées (10), s'intercalant entre le réseau de cheminées gaz (9), lorsque ce réseau de cheminées gaz existe. Cette variante avec réseau de cheminées (9) pour le by-pass du gaz, et réseau de cheminées (10) pour l'évacuation du liquide est représentée par la figure 4.

Dans cette variante, le pas entre cheminées (10) pour le retour du liquide est préférentiellement soit carré, soit triangulaire.

Le nombre de cheminées (10) par unité de section de la zone catalytique est préférentiellement compris entre 20 et 200 cheminées/m², et de manière préférée entre 100 et 150 cheminées/m².

Ceci permet de distribuer le liquide de manière sensiblement homogène en tête de zone de distillation inférieure.

L'écoulement du liquide dans les cheminées (10) est descendant et permet de ramener le liquide en amont de la zone de distillation située au-dessous de la zone catalytique.

Dans ce cas on utilise préférentiellement un garnissage comme contacteur entre le gaz et le liquide au niveau de la zone de distillation aval.

On reste dans le cadre de la présente invention en combinant les différentes variantes, c'est-à-dire :
- Avec une évacuation du liquide par la zone périphérique dédiée (6) et un by-pass de la zone catalytique par le gaz au moyen du réseau de cheminées (9) selon la figure 3.
- Avec une évacuation du liquide par le réseau de cheminées (10) et un by-pass de la zone catalytique par le gaz au moyen de la zone périphérique dédiée (7).
- Avec une évacuation du liquide par le réseau de cheminées (10) et un by-pass de la zone catalytique par le gaz au moyen du réseau de cheminées (9) selon la figure 4.

### EXEMPLES COMPARATIFS

l'exemple 1 est établi sur une colonne de l'art antérieur à capacité normale.
L'exemple 2 est établi sur une colonne selon l'invention à capacité normale.
L'exemple 3 est établi sur une colonne de l'art antérieur à capacité de 110%
L'exemple 4 est établi sur une colonne selon l'invention à capacité de 110%.

Les comparaisons doivent donc être faites entre 1 et 2 pour une marche à capacité normale, et entre 3 et 4 pour une marche en surcapacité de 10%.

La colonne selon l'invention possède un_collecteur central (3) équipé d'un dispositif de trop plein dont la hauteur H est définie en fonction des pertes de charges liquide à la traversée de la plaque (15) et du lit catalytique (8), la hauteur H étant précisément définie comme la hauteur de liquide maximale entre le niveau de débordement de la couche liquide (11) et le haut du dispositif de trop plein du collecteur central (3).

Les dimensions principales de la colonne sont les suivantes :
Hauteur totale entre deux plateaux, c'est-à-dire entre la plateau collecteur et le plateau dit de distillation : 2,5m
Diamètre :1,20m
Hauteur d'un lit catalytique : 0,5 m
Hauteur H : 0,65 m
Evacuation du liquide par zone périphérique (6)
Bypass du gaz par zone périphérique dédiée (7)

La colonne réactive est utilisée dans un procédé d'éthérification d'une coupe C4 contenant des oléfines (butène -1 , butène - 2 cis, butène - 2 trans, iso butène) des paraffines (n butane, isobutane).

Cette colonne réactive comporte 5 doublets réactifs. On appelle doublet l'ensemble d'un plateau distributeur supérieur, du lit catalytique situé en aval, et de la zone de distillation adjacente en aval du lit catalytique. Un doublet correspond à un étage théorique de distillation.

La colonne comporte 33 plateaux théoriques incluant le rebouilleur (conventionnellement plateau 33) et le condenseur (conventionnellement plateau 1).

La charge est introduite plateau 24, les lits catalytiques sont situé entre les plateaux théorique 5 et 6 , 7 et 8 , 9 et 10, 11 et 12 et 13 et 14.

La pression en tête de colonne est maintenu à 790 kPa, la température est de 67,2°C en tête et 152°C au rebouilleur.

La charge de la colonne à distiller réactive a la composition donnée dans le tableau 1 ci-dessous.

**Tableau 1 composition de la charge de la colonne catalytique**

| composition de la charge | % poids |
|---|---|
| IC4 | 15,910% |
| IBTE | 3,160% |
| 1BUTENE | 16,300% |
| NC4 | 6,340% |
| BTT2 | 11,930% |
| BTC2 | 8,670% |
| IC5 | 1,550% |
| ETBE | 31,950% |
| ETOH | 3,580% |
| TBA | 0,610% |

On observe la performance de la colonne catalytique en fonction de sa capacité d'utilisation et du type d'interne utilisé.

Les exemples ont été établis sur une simulation numérique qui a été préalablement calée sur un cas industriel analogue.

Le logiciel de simulation ProII est utilisé pour réaliser les simulations.

La cinétique de réaction pour les éthérification est basée sur l'étude publiée dans « Kinetics and mechanism of ethyl tert-butyl ether liquid-phase synthesis, Françoisse, O.. Chemical Engineering and Processing: Process Intensification Volume: 30 Issue 3 (1991) ISSN: 0255-2701 Online ISSN: 1873-3204".

Les exemples 1 et 3 correspondent à des cas utilisant un interne de distillation catalytique selon l'art antérieur,
- avec une capacité opératoire de 100% pour l'exemple 1. Le réservoir 3 du doublet dimensionnant est alors plein, mais sans débordement.
- en sur capacité (110% de charge) pour l'exemple 3.

Le calcul montre que c'est le doublet le plus haut dans la colonne, soit le doublet 1, qui voit le plus gros débit liquide en marche à 100%, et qui donc 'déborde' dans l'exemple 3 en surcapacité à 110%.

Les exemples 2 et 4 sont réalisés avec un interne selon la figure 2 de l'invention,
- avec une capacité opératoire de 100% pour l'exemple 2. Le réservoir 3 du doublet dimensionnant est alors plein, mais sans débordement.
- en sur capacité (110% de charge) pour l'exemple 4.

Le calcul montre que c'est le doublet le plus haut dans la colonne, soit le doublet 1, qui fonctionne avec un débit de 10% du liquide interne passant par le dispositif selon l'invention dans le réservoir supérieur 3.

La comparaison des résultats est présentée dans le tableau 2 ci-dessous :

**Tableau 2 - résultat de simulation entre une colonne catalytique utilisant un interne selon l'art antérieur ou selon l'invention.**

| Exemple N° | | 1 | 2 | 3 | 4 |
|---|---|---|---|---|---|
| Reflux/charge | *Poids*/*poids* | 0,46 | 0,46 | 0,46 | 0,46 |
| Pression relative tête | *bar* | 7,20 | 7,20 | **7,20** | **7,20** |
| Delta P colonne | *kPa* | 50,00 | 50,00 | **175,00** | **57,00** |
| T Fond | °*c* | 152,00 | 152,00 | 163,00 | 157,00 |
| | | | | | |

| **Conversion isobutène** | **% *poids*** | **50,00%** | **50,00%** | **45,00%** | **51,00%** |
|---|---|---|---|---|---|
| EtOH tête | *% poids* | 0,81% | 0,81% | 1,06% | 1,00% |
| EtOH fond | *% poids* | 5,39% | 5,39% | 5,40% | 5,13% |
| | | | | | |
| Débit alimentation | *kg*/*h* | 25 650 | 25 650 | 28 215 | 28 215 |
| Débit fond | *kg*/*h* | 9 600 | 9 600 | 10 483 | 10 571 |
| Débit distillat | *kg*/*h* | 16 050 | 16 050 | 17 732 | 17 644 |

L'intérêt de la colonne selon l'invention apparait surtout en cas de marche en régime de surcapacité. C'est-à-dire en comparant les exemples 3 et 4.

En effet, dans le cas selon l'art antérieur (exemple 3), à marche 110%, l'absence de trop plein ne permet pas au liquide excédentaire de s'écouler. Il se crée ainsi une surpression et une dégradation du pouvoir de séparation de la colonne. Le produit de fond est entrainé vers le haut de la colonne, dégradant le fonctionnement en terme de conversion.

De l'éthanol est également perdu en bas de colonne, en raison de la perte de séparation et de conversion. Le débit de soutirage augmente globalement en raison de l'ETBE, produit de la réaction, que l'on arrive plus à séparer en tête. Le fonctionnement n'est pas ici satisfaisant. Dans le cas selon l'invention (exemple 4), à marche 110%, la hausse de capacité crée une surpression limitée à quelques kPa. Ce réchauffement provoque une hausse très légère de la conversion catalytique. Cette hausse de conversion compense le bypass liquide du catalyseur via le dispositif selon l'invention.

De plus, l'interne selon l'invention permet de maintenir la séparation léger / lourd de la colonne en sur capacité des doublets. Il n'y a pas de remontée d'ETBE dans l'effluent de tête de colonne, et on conserve globalement la même répartition tête et fond que dans les cas de marche sans surcapacité.

En considérant les exemples 1 et 2 de marche à capacité normale, on pourrait conclure à tort que l'invention n'amène pas d'amélioration. Mais en fait la plus part des marches se situent à 100%, et débordent souvent vers 110%, voire 120%. C'est alors que le dispositif selon l'invention donne globalement beaucoup plus de sécurité de fonctionnement.

## Revendications

1. Colonne de distillation réactive constituée par l'alternance de zones catalytiques (8) et de zones de distillation (B) dans laquelle, au niveau de chacune des zones catalytiques (8), le liquide est introduit en amont de ladite zone par l'intermédiaire d'un collecteur liquide central comprenant une première partie cylindrique ou parallélépipédique (3) suivie d'une seconde partie tubulaire (4) qui amène le liquide dans une zone de distribution liquide (5) située au-dessous de la zone catalytique (8), et ayant la même section que ladite zone catalytique, le liquide traversant ensuite la zone catalytique en écoulement ascendant et étant évacué de ladite zone catalytique par débordement au-dessus d'une paroi latérale (12) définissant une couche liquide supérieure (11) et distribuant le liquide vers une zone périphérique (6) attenante à la paroi de la colonne, ou par débordement dans un système de cheminées (10) dont le niveau de l'extrémité supérieure ouverte définit la couche liquide supérieure (11) et traversant la zone catalytique, le gaz contournant la zone catalytique (C) par une zone périphérique dédiée (7) ou par un réseau de cheminées verticales (9) qui débouchent au-dessus de la couche liquide supérieure (11), le collecteur liquide central étant équipé d'un dispositif de trop plein dont la hauteur H, précisément définie comme la hauteur de liquide maximale entre le niveau de débordement de la couche liquide supérieure (11) et le haut du dispositif de trop plein du collecteur central, a une valeur comprise entre 0,3 m et 1 m.

2. Colonne de distillation réactive selon la revendication 1, dans laquelle l'évacuation du liquide se fait par une zone périphérique dédiée (6), et le contournement de la zone catalytique par le gaz se fait au moyen du réseau de cheminées (9).

3. Colonne de distillation réactive selon la revendication 1, dans laquelle l'évacuation du liquide se fait par un réseau de cheminées (10), et le contournement de la zone catalytique par le gaz se fait au moyen du réseau de cheminées (9).

4. Colonne de distillation réactive selon la revendication 1, dans laquelle le nombre de cheminées (9) permettant le contournement du gaz vis-à-vis de la zone catalytique, par unité de section de la zone catalytique est compris entre 1 et 20 cheminées/m².

5. Colonne de distillation réactive selon la revendication 1, dans laquelle le liquide est évacué de la zone catalytique par un réseau de cheminées (10), et le contournement de la zone catalytique par le gaz est réalisé par une zone périphérique dédiée (7).

6. Colonne de distillation réactive selon la revendication 1, dans laquelle le liquide est évacué de la zone catalytique par un réseau de cheminées (10), et le contournement de la zone catalytique par le gaz est réalisé par un second réseau de cheminées (9), le réseau de cheminées (10) s'intercalant entre le réseau de cheminées gaz (9).

7. Colonne de distillation réactive selon la revendication 6, dans laquelle le nombre de cheminées d'évacuation du liquide (10) est compris entre 20 et 200 cheminées/m², et de manière préférée entre 100 et 150 cheminées/m².

## Patentansprüche

1. Reaktive Destillationssäule, bestehend aus abwechselnden katalytischen Zonen (8) und Destillationszonen (B), wobei, auf der Höhe jeder der katalytischen Zonen (8), die Flüssigkeit vor der Zone mit Hilfe eines zentralen Flüssigkeitssammlers eingebracht wird, umfassend einen ersten zylindrischen oder parallelepipedförmigen Abschnitt (3), gefolgt von einem zweiten rohrförmigen Abschnitt (4), der die Flüssigkeit in eine Flüssigkeitsverteilungszone (5) führt, die unter der katalytischen Zone (8) angeordnet ist, und mit demselben Querschnitt wie die katalytische Zone, wobei die Flüssigkeit anschließend die katalytische Zone durch aufsteigendes Strömen durchquert und aus der katalytischen Zone durch Überlaufen über eine laterale Wand (12) abgeführt wird, die eine obere flüssige Schicht (11) definiert, und die Flüssigkeit zu einer peripheren Zone (6) verteilt, angrenzend an die Wand der Säule, oder durch Überlaufen in ein Abzugsleitungssystem (10), dessen Höhe des oberen offenen Endes die obere flüssige Schicht (11) definiert, und die katalytische Zone durchquert, wobei das Gas die katalytische Zone (C) durch eine spezifische periphere Zone (7) umgeht, oder durch ein Netz vertikaler Kamine (9), die über der oberen flüssigen Schicht (11) einmünden, wobei der zentrale Flüssigkeitssammler mit einer Überlaufvorrichtung ausgestattet ist, deren Höhe H, die genau als maximale Höhe der Flüssigkeit zwischen der Höhe des Überlaufs der oberen flüssigen Schicht (11) und der Höhe der Überlaufvorrichtung des zentralen Sammlers definiert wird, einen Wert zwischen 0,3 m und 1 m aufweist.

2. Reaktive Destillationssäule nach Anspruch 1, wobei die Abfuhr der Flüssigkeit durch eine spezifische periphere Zone (6) erfolgt, und die Umgehung der katalytischen Zone durch das Gas mit Hilfe des Netzes von Kaminen (9) erfolgt.

3. Reaktive Destillationssäule nach Anspruch 1, wobei die Abfuhr der Flüssigkeit durch ein Netz von Abzugsleitungen (10) erfolgt, und die Umgehung der katalytischen Zone durch das Gas mit Hilfe des Netzes von Kaminen (9) erfolgt.

4. Reaktive Destillationssäule nach Anspruch 1, wobei die Anzahl von Kaminen (9), die das Umgehen des Gases gegenüber der katalytischen Zone gestatten, pro Sektionseinheit der katalytischen Zone zwischen 1 und 20 Kamine/m² beträgt.

5. Reaktive Destillationssäule nach Anspruch 1, wobei die Flüssigkeit aus der katalytischen Zone durch ein Netz von Abzugsleitungen (10) abgeführt wird, und das Umgehen der katalytischen Zone durch das Gas durch eine spezifische periphere Zone (7) erfolgt.

6. Reaktive Destillationssäule nach Anspruch 1, wobei die Flüssigkeit aus der katalytischen Zone durch ein Netz von Abzugsleitungen (10) abgeführt wird, und das Umgehen der katalytischen Zone durch das Gas durch ein zweites Netz von Kaminen (9) erfolgt, wobei das Netz von Abzugsleitungen (10) zwischen dem Netz von Gaskaminen (9) angeordnet ist.

7. Reaktive Destillationssäule nach Anspruch 6, wobei die Anzahl von Abzugsleitungen (10) zur Abfuhr der Flüssigkeit zwischen 20 und 200 Abzugsleitungen/m² beträgt, und bevorzugt zwischen 100 und 150 Abzugsleitungen/m².

## Claims

1. A reactive distillation column constituted by alternating catalytic zones (8) and distillation zones (B) in which, at each of the catalytic zones (8), the liquid is introduced upstream of said zone via a central liquid collector comprising a first cylindrical or parallelepipedal portion (3) followed by a second tubular portion (4) which brings the liquid into a liquid distribution zone (5) located below the catalytic zone (8) and having the same section as said catalytic zone, the liquid then passing through the catalytic zone in upflow mode and being evacuated from said catalytic zone by overflowing over a lateral wall (12) defining an upper liquid layer (11) and distributing the liquid to a peripheral zone (6) abutting the wall of the column or by overflowing in a system of vents (10), the open upper end level of which defines the upper liquid layer (11) and passing through the catalytic zone, the gas bypassing the catalytic zone (C) via a dedicated peripheral zone (7) or via an array of vertical vents (9) which discharge above the upper liquid layer (11), the central liquid collector being provided with an overflow device the height H of which, precisely defined as the maximum height of liquid between the level of weir of the upper liquid layer (11) and the top of the overflow device of the central collector, has a value in the range 0.3 m to 1 m.

2. The reactive distillation column as claimed in claim 1, in which the liquid is evacuated via a dedicated peripheral zone (6), and the catalytic zone is bypassed by the gas by means of an array of vents (9).

3. The reactive distillation column as claimed in claim 1, in which the liquid is evacuated via an array of vents (10), and the catalytic zone is bypassed by the gas by means of an array of vents (9).

4. The reactive distillation column as claimed in claim 1, in which the number of vents (9) to allow the gas to bypass the catalytic zone per unit section of the catalytic zone is in the range 1 to 20 vents/m².

5. The reactive distillation column as claimed in claim 1, in which the liquid is evacuated from the catalytic zone via an array of vents (10) and the catalytic zone is bypassed by the gas by means of a dedicated peripheral zone (7).

6. The reactive distillation column as claimed in claim 1, in which the liquid is evacuated from the catalytic zone via an array of vents (10) and the catalytic zone is bypassed by the gas by means of a second array of vents (9), the array of vents (10) being interposed between the array of gas vents (9).

7. The reactive distillation column as claimed in claim 6, in which the number of liquid evacuation vents (10) is in the range 20 to 200 vents/m², preferably in the range 100 to 150 vents/m².
